# EUROPEAN PATENT APPLICATION

(11) **EP 4 729 346 A1**
(43) Date of publication of application: **22.04.2026**
(21) Application number: 24858378.3
(22) Date of filing: 20.08.2024
(51) Int. Cl.: B60L 53/62, B60L 53/60, B60L 53/31

(54) **CHARGING POWER ALLOCATION METHOD, ELECTRONIC DEVICE, AND STORAGE MEDIUM**

(30) Priority: 28.08.2023 CN 202311091793
(71) Applicant: Autel Digital Power Co., Ltd., Shenzhen, Guangdong 518000 (CN)
(72) Inventor: LIANG, Lina, Shenzhen, Guangdong 518000 (CN); ZHANG, Yuqin, Shenzhen, Guangdong 518000 (CN); WU, Chao, Shenzhen, Guangdong 518000 (CN)
(74) Representative: Harris, Oliver John Richard
(86) International application number: PCT/CN2024/113283
(87) International publication number: WO 2025/044835

(57) **Abstract**

A charging power allocation method, an electronic device, and a storage medium. The charging power allocation method comprises: acquiring a set of power to be allocated, wherein the set of power to be allocated comprises allocation-pending charging units in a state of waiting for power allocation, and the total power to be allocated of the set of power to be allocated is preset total power minus the total allocated power; determining target power on the basis of average power of the set of power to be allocated and a power upper limit value of a target charging unit, wherein the target charging unit is an allocation-pending charging unit in thce set of power to be allocated; and allocating power to the target charging unit on the basis of the target power. By comparing the average power and the power upper limit value, the charging units with smaller charging power requirements in the set of power to be allocated are charged at the maximum power, and the redundant power compared with the average power is recovered and equally allocated to the remaining charging units with larger charging power requirements, so that the charging power allocation is more reasonable and the power utilization efficiency is improved.

## Description

### CROSS-REFERENCE TO RELATED APPLICATIONS

The present application claims priority to the Chinese patent application No. 202311091793.8, entitled "Charging Power Allocation Method, Electronic Device, and Storage Medium", filed to the China National Intellectual Property Administration on August 28, 2023, the entire contents of which are incorporated herein by reference.

### TECHNICAL FIELD

The present application relates to the charging technical field, and in particular to a charging power allocation method, an electronic device, and a storage medium.

### BACKGROUND

With the development of new energy vehicles, charging piles, as power supply devices for new energy vehicles, have gradually evolved from improvements at the hardware level to breakthroughs at the software level in order to provide users with a safer, more stable, more reasonable, and more personalized charging environment.

Due to the rapid expansion of charging pile usage, during charging, users charging purely based on the maximum power of the charging pile at the hardware level can easily lead to overload in the entire charging station. Moreover, in large-scale charging stations, unreasonable charging power allocation often occurs, resulting in low power utilization efficiency across the station.

### SUMMARY

The present application provides a charging power allocation method, an electronic device, and a storage medium, to solve the problem of low power utilization efficiency of a charging station caused by unreasonable power allocation in the prior art.

In an embodiment, the present application provides a power adjustment method, including:
acquiring a set of power to be allocated, wherein the set of power to be allocated comprises an allocation-pending charging unit in a state of waiting for power allocation, and a total power to be allocated of the set of power to be allocated is a preset total power minus a total allocated power;
determining a target power according to an average power of the set of power to be allocated and a power upper limit value of a target charging unit, wherein the target charging unit is one allocation-pending charging unit of the set of power to be allocated; and
allocating power to the target charging unit according to the target power.

Optionally, determining a target power according to the average power and a power upper limit value of a target charging unit comprises:
acquiring the average power of the set of power to be allocated and a candidate power set;
traversing the set of power to be allocated to determine one charging unit as the target charging unit; and
judging whether the power upper limit value of the target charging unit is smaller than the average power,
if yes, determining the power upper limit value as the target power, and calculating the total power to be allocated based on the target power and the preset total power, and
if no, moving the target charging unit to the candidate power set.

Optionally, acquiring the average power of the set of power to be allocated comprises:
determining that the set of power to be allocated contains a first quantity of allocation-pending charging units; and
calculating the average power of the set of power to be allocated according to the total power to be allocated and the first quantity.

Optionally, the charging power method further comprises:
when all charging units in the set of power to be allocated have been traversed, determining a new set of power to be allocated based on the candidate power set.

Optionally, the charging power method further comprises:
when all the charging units in the set of power to be allocated have been traversed, judging whether a second quantity of charging units contained in the candidate power set is equal to a quantity of the set of power to be allocated before traversal; and
if they are equal, determining the average power as the target power.

Optionally, prior to determining a target power, the method further comprises:
determining a first power upper limit value of a charging device corresponding to the allocation-pending charging unit;
determining a second power upper limit value of a device to be charged corresponding to the allocation-pending charging unit; and
determining the power upper limit value of the allocation-pending charging unit based on a minimum of the first power upper limit value and the second power upper limit value.

Optionally, prior to determining the power upper limit value of the allocation-pending charging unit, the method further comprises:
acquiring a reported power value of the allocation-pending charging unit;
determining that a sum of the reported power value and a preset threshold value is a third power upper limit value; and
then, the determining the power upper limit value of the allocation-pending charging unit being:
   determining the power upper limit value of the allocation-pending charging unit based on a minimum of the first power upper limit value, the second power upper limit value, and the third power upper limit value.

Optionally, after determining the power upper limit value of the allocation-pending charging unit, the method further comprises:
judging whether the total power to be allocated is greater than a sum of the power upper limit values; and
when the total power to be allocated is greater than the sum of the power upper limit values, allocating power to the charging unit according to the power upper limit value.

Optionally, prior to determining a target power, the method further comprises:
determining a power lower limit value of the allocation-pending charging unit;
judging whether a sum of the power lower limit values is greater than the total power to be allocated; and
when the sum of the power lower limit values is greater than the total power to be allocated, allocating power to the charging unit according to the power lower limit value.

In an embodiment, the present application further provides an electronic device including a memory, a processor, and a computer program stored in the memory and executable on the processor, wherein the processor, when executing the computer program, implements the method according to the first aspect.

In an embodiment, the present application further provides a storage medium storing a computer program. The computer program, when executed by a processor, implements the method according to the first aspect.

The charging power allocation method in the embodiments of the present application determines the target power by comparing the average power of a set of power to be allocated with the power upper limit value of the target charging unit, so that for each allocation-pending charging unit in the set of power to be allocated, a charging unit with a lower charging power demand and a lower power upper limit value is charged at the maximum power. The redundant power relative to the average power is recovered and evenly allocated to other charging units with higher charging power demands, thereby avoiding power overload of the entire charging station and making the charging power allocation more reasonable, and thus improving the power utilization efficiency of the entire charging station.

### BRIEF DESCRIPTION OF THE DRAWINGS

In order to more clearly explain the technical scheme of the embodiments of the present application, the following will briefly introduce the drawings that need to be used in the description of the embodiments of the present application. It is obvious that the drawings described below are only some embodiments of the present application. For those of ordinary skills in the art, other drawings can also be obtained according to the accompanying drawings without creative efforts.
Fig. 1 is a schematic diagram illustrating an application environment of a charging power allocation method according to an embodiment of the present application;
Fig. 2 is a schematic flow diagram of a charging power allocation method according to an embodiment of the present application;
Fig. 3 is a schematic flow diagram of a method for determining a target power according to an embodiment of the present application;
Fig. 4 is an architecture diagram of a charging station with a multi-tier architecture according to an embodiment of the present application; and
Fig. 5 is a schematic diagram of a computer device architecture according to an embodiment of the present application.

### DETAILED DESCRIPTION OF THE INVENTION

The technical solutions in the embodiments of the present application will be clearly and completely described below in conjunction with the accompanying drawings in the embodiments of the present application. Obviously, the described embodiments are a part of the embodiments of the present application, rather than all the embodiments. Based on the embodiments of the present application, all other embodiments obtained by one of ordinary skill in the art without involving any inventive efforts are within the scope of the present invention.

First, an application environment of a charging power allocation method provided by an embodiment of the present application will be described.

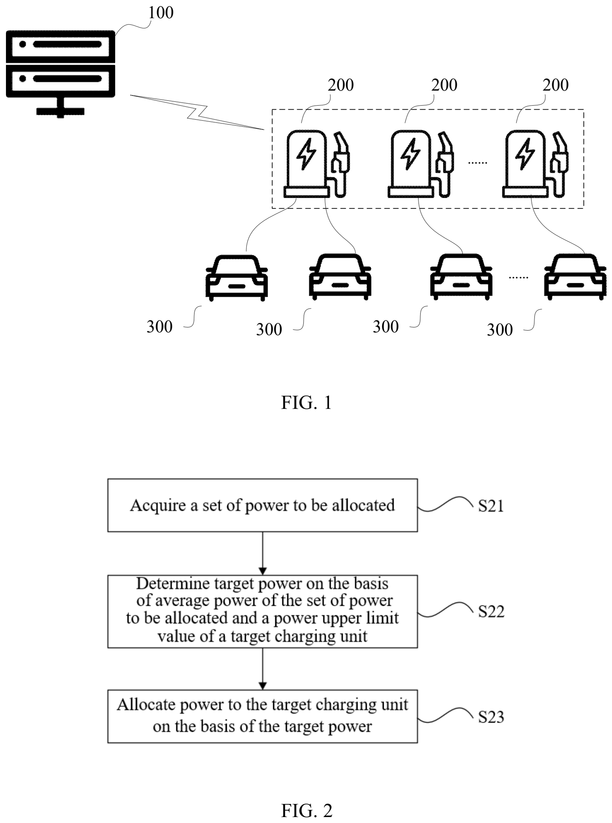

Reference is now made to Fig. 1, which is a schematic diagram illustrating an application environment of a charging power allocation method according to an embodiment of the present application. The method provided by an embodiment of the present application can be applied to a charging system as shown in Fig. 1. The charging system comprises a charging management device 100 and a plurality of charging units 200, wherein the charging management device 100 is communicatively connected to the charging units 200 and allocates power to each charging unit 200 according to a charging power allocation method, and the charging unit 200 can be electrically connected to a user's device to be charged 300 and charge the device to be charged 300 according to the allocated power, or may include charging sub-units such that power is allocated to charging sub-units according to the charging power allocation method, and the user's device to be charged 300 is charged via the sub-units.

Specifically, in some embodiments, the charging system is a charging station, and the charging unit 200 refers to a plurality of groups included in the charging station. The charging station needs to allocate the total power of the charging station to the respective groups so that each group can complete its respective charging task. In the process of charging power allocation to a group, it is only necessary to determine the total value of power to be allocated of the charging station and the actual charging situation of each group, for example, the maximum value of the charging power required by the group, and then the power value allocated to each group can be calculated according to the charging power allocation algorithm of the embodiment of the present application.

In some embodiments, the charging system is a charging group, and the charging unit 200 refers to a plurality of charging piles included in the charging group, and the charging group needs to allocate the total power of the charging group to the respective charging piles so that each group can complete its respective charging task. Likewise, it is necessary to determine the total value of the power to be allocated for the charging group and the actual charging situation of each charging pile, and, in combination with the charging power allocation method, calculate the value of the power allocated to each charging pile. It can be seen therefrom that the charging unit 200 can be either a virtual charging group or a physical charging device, such as a charging pile.

In some other embodiments, the charging system is a charging station, the charging unit 200 is a charging group, and the sub-unit included in the charging unit 200 is a charging pile. Firstly, the parameters required by the charging power allocation method include the total value of the power to be allocated by the charging station and the charging condition of each charging pile, and the charging condition of the group is determined according to the charging condition of the charging pile. Then, based on the charging station and the charging group, the allocated power of the charging group is calculated according to the charging power allocation method. Secondly, based on the charging group and the charging pile, the allocated power of the charging pile is calculated according to the charging power allocation method. In this way, unified power allocation for a charging station with multi-tier architecture is realized, so that the charging power allocation method is applicable to charging stations of different architectural types, thereby reducing the risk of overload operation of the charging station and improving its power utilization efficiency.

It could be understood that the charging power allocation method provided by the embodiments of the present application can not only allocate power from a charging station to charging groups and from a charging group to charging piles, but also obviously allocate power from a charging pile to a charging gun. And on this basis, the applicable system of the charging power allocation method can be extended to match more complex charging station architectures, for example, charging station-charging group-charging pile-charging gun architectures.

It could also be appreciated that the charging power allocation method provided by embodiments of the present application can be configured to be used only for certain hierarchical architectures in the charging pile, while other hierarchical architectures are configured to be adapted with other algorithms, as needed. For example, a charging station allocates power to a charging group according to the charging power allocation method of the embodiment of the present application, and the charging group applies a first-come-first-served conventional power allocation method to allocate power to charging piles.

The charging management device 100 is communicatively connected to the charging unit 200, and configured to manage the charging unit 200. In particular embodiments, the charging management device 100 may consist of one or more workstations or servers, and enables data collection and querying from a charging unit 200 such as a charging group or a charging pile, as well as data processing and analysis from a charging system such as a charging station and a charging group and charging power allocation plan generation for it. Specifically, the data that can be acquired by the charging management device 100 includes the total power to be allocated of the charging system and the power upper limit value and/or power lower limit value of the charging unit 200.

In some embodiments, the charging unit 200 includes a monitoring module configured to monitor the charging condition of the charging unit 200, and the charging management device 100 acquires and analyzes the charging condition of the charging unit 200 to adjust the charging power allocation algorithm according to the charging condition, so that the charging power allocation structure converges to the actual charging condition, and further recovers redundant power for release, thereby improving the power utilization efficiency of the charging system.

Based on the above charging system, the charging power allocation method provided by the present application can be implemented.

With reference to Fig. 2, Fig. 2 is a schematic flow diagram of a charging power allocation method according to an embodiment of the present application, and the method may include:
S21: acquiring a set of power to be allocated.

In this step, the set of power to be allocated is a set composed of multiple allocation-pending charging units in a state of waiting for power allocation. For example, a situation that if the charging system comprises five charging units, wherein one charging unit is in a dormant state and does not participate in charging operations, then the dormant charging unit does not belong to the set of power to be allocated. Of the remaining four charging units, one has already been allocated charging power, as it has been allocated charging power, thus belongs to the set that has been allocated power, not the set of power to be allocated. The remaining three charging units are either already connected to a device to be charged and ready for charging, or requiring further power allocation to subordinate charging sub-units; and in summary, these three charging units need to be allocated charging power to complete their designated tasks, so they belong to the set of power to be allocated, and it can also be determined that the number of elements included in the set of power to be allocated is three.

In this step, the set of power to be allocated has a total power to be allocated. The total power to be allocated is defined as the total power value that can be allocated to all allocation-pending charging units within the set of power to be allocated. By way of example, the charging system can provide a total power value of 10 power units, of which 3 units of power value have already been allocated to some charging units, leaving a total power value of 7 units for allocation to allocation-pending charging units. Therefore, the total power to be allocated is more specifically defined as the preset total power minus the total allocated power, and in general, this definition facilitates easier calculation of the total power to be allocated. It could be understood that the aforementioned power unit may be an internationally commonly used unit such as kW (kilowatt) or PS (horsepower), or may be any other virtual unit configured to represent the concept of power. The power unit herein is merely for illustrative purposes to clarify the concept and does not impose any limitation on the technical solution of the present application.

In the present step, the manner of acquiring the set of power to be allocated is to traverse the charging units of the charging system. For example, a situation that the charging power allocation method is executed by the charging management device. The charging management device sends a request to each charging unit subordinate to the charging system, or directly retrieves the state of each charging unit under authorization, to determine whether each charging unit is in a power-to-be-allocated state. For any one of the plurality of charging units, when it is determined that it is in a power-to-be-allocated state, the charging management device generates an initially empty set, and moves the allocation-pending charging unit waiting for power allocation into the set. When all allocation-pending charging units in the charging system have been moved into the set, the set becomes the set of power to be allocated, and at this point, the step of acquiring the set of power to be allocated is completed.

S22, a target power is determined on the basis of the average power of the set of power to be allocated and a power upper limit value of a target charging unit.

In the present step, the average power of the set of power to be allocated is the average power value of the allocation-pending charging units in the set of power to be allocated, specifically defined as the total power to be allocated of the set of power to be allocated divided by the number of allocation-pending charging units.

The method for acquiring the average power of the set of power to be allocated specifically includes: determining the first quantity of allocation-pending charging units included in the set of power to be allocated, and calculating the average power of the set of power to be allocated based on the total power to be allocated and the first quantity. For example, a situation that if the number of allocation-pending charging units is determined to be 3, and the total power to be allocated of the set of power to be allocated is 30 power units, then the average power of the set of power to be allocated is calculated as 10 power units.

In this step, the target charging unit is one of the allocation-pending charging units in the set of power to be allocated. It could be understood that the target charging unit does not refer specifically to one allocation-pending charging unit with certain specific characteristics to distinguish it from other allocation-pending charging units, but rather refers to any one of the allocation-pending charging units in the charging power allocation method. It could be understood that in the process of allocating power to allocation-pending charging units according to the charging power allocation method, power needs to first be allocated to one allocation-pending charging unit, then to the next, followed by the third, fourth, and so on, until the last allocation-pending charging unit is allocated power. Therefore, during the process of allocating power to one of the allocation-pending charging units, the target charging unit is defined as the allocation-pending charging unit currently undergoing the charging power allocation process; and once power has been allocated to this target charging unit, the target charging unit is no longer an allocation-pending charging unit, and the next allocation-pending charging unit to undergo charging power allocation becomes the target charging unit.

In this step, the power upper limit value is defined as the maximum power value that the charging unit can output under normal operating state. For example, a situation that if the charging unit is a charging pile with a power upper limit value of 10 power units, allocating 12 power units of power value to this charging pile would place the charging pile in an overload state, which may lead to charging pile accidents, thereby causing hardware damage and like conditions. Specifically, the power upper limit value may be the maximum power value that can output by the charging device corresponding to the charging unit, such as a charging gun, or the maximum power value that can be received by the device to be charged corresponding to the charging unit, such as a battery pack of a new energy vehicle, or the actual maximum power value detected by the charging unit; and more detailed descriptions are provided later.

In this step, the way of determining the target power is numerical comparison-specifically, comparing the average power of the set of power to be allocated with the numerical value of the power upper limit value of the target charging unit. Specifically, the average power of the set of power to be allocated and the power upper limit value of the target charging unit respectively constitute two constraint conditions of the target charging unit, namely, the power of the target charging unit is less than or equal to the average power and the power of the target charging unit is less than or equal to the power upper limit value. Otherwise, if the power of the target charging unit is greater than the average power, the power of other allocation-pending charging units will be too low to complete their charging tasks; whereas, if the power of the target charging unit exceeds the power upper limit value, the target charging unit may become overloaded and cause an accident. In summary, the way of determining the target power of the target charging unit is comparing the average power of the set of power to be allocated with the numerical value of the power upper limit value of the target charging unit, and determining the target power as the smaller of the average power and the power upper limit value.

S23, power is allocated to the target charging unit on the basis of the target power.

In this step, since the target power of the target charging unit may vary during the execution of the charging power allocation method, when allocating power to the target charging unit based on the target power is performed, it is necessary to first determine the target power of each target charging unit; and after it is determined that the target powers of all target charging units will no longer change, power is then uniformly allocated to each target charging unit according to its respective target power. For example, a situation that when determining the target power of the first target charging unit is performed, the corresponding target power is the average power, and the average power is 10 power units. However, after determining the target powers of several subsequent target charging units, if the average power changes to 12 power units, then the target power of the first target charging unit will change from 10 power units to 12 power units. Therefore, to avoid repeatedly correcting power allocations to the target charging unit, power needs to be uniformly allocated after the target power is determined.

Through the above solution, by comparing the average power of the allocation-pending charging set with the power upper limit value of each target charging unit, a target charging unit with a lower charging power demand can be charged at the power upper limit value, preventing power redundancy; and for a target charging unit with a higher charging power demand, redundant power is evenly allocated to increase the allocated power. This ensures that charging units with low charging power demands in the entire system operate at full capacity without overloading, while those with high charging power demands receive both average power and redundant power, maximizing the allocation of power as much as possible. As a result, charging units with different charging power requirements across the system can obtain optimized power allocation, thereby improving the overall power utilization efficiency.

The method for determining the target power will be described in detail below.

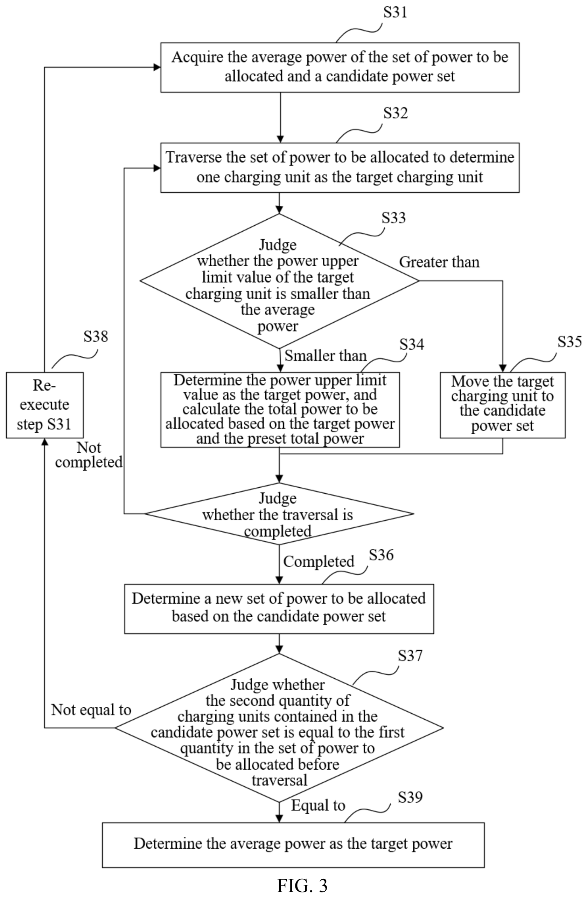

Please refer to Fig. 3, which is a schematic flow diagram of a method for determining a target power according to an embodiment of the present application. The method includes steps as follows.

S31: acquiring the average power of the set of power to be allocated and a candidate power set.

In this step, the candidate power set is initially an empty set, configured to determine target charging units with relatively high charging power demands during the power allocation process, and the specific usage of the candidate power set is detailed in step S35.

It could be understood that the definition and acquisition method of the average power have been fully described above and are not repeated herein.

S32: traversing the set of power to be allocated to determine one charging unit as the target charging unit.

In this step, one allocation-pending charging unit within the power to be allocated is determined as the target charging unit, and steps S33, S34, and S35 are executed. After step S34 or S35 is completed, another allocation-pending charging unit in the power to be allocated is determined as the target charging unit to execute the subsequent steps, until all allocation-pending charging units in the set of power to be allocated have completed the subsequent steps.

S33: judging whether the power upper limit value of the target charging unit is smaller than the average power.

S34: if yes, determining the power upper limit value as the target power, and calculating the total power to be allocated based on the target power and the preset total power.

In this step, when the power upper limit value of the target charging unit is smaller than the average power, the target power of the target charging unit can be directly determined as the power upper limit value according to the aforementioned constraint condition. After the target power of the target charging unit is determined, since the target power has been determined, the target charging unit is no longer in a state of waiting for power allocation, and the target charging unit is removed from the set of power to be allocated. Accordingly, the total power to be allocated of the set of power to be allocated is determined as the preset total power minus the target power. It could be appreciated that the preset total power may be the last updated total power to be allocated. For example, a situation that if the target power of the target charging unit is 8 power units and the preset total power is 30 power units, then the total power to be allocated of the set of power to be allocated is determined to be 22 power units.

S35: if no, moving the target charging unit to the candidate power set.

In this step, the candidate power set is configured to obtain target charging units with higher charging power demand from the set of power to be allocated, and can be specifically defined as a set consisting of target charging units whose power upper limit values are greater than the average power. As mentioned above, the charging power demand of a target charging unit with a power upper limit value smaller than the average power is relatively low. Therefore, power is allocated according to its power upper limit value, resulting in a reduction in actual allocated power of the target charging unit compared to the originally preset allocated average power, thereby generating redundant power available for reallocation. To improve the overall power utilization efficiency, the redundant power is reallocated to target charging units with higher charging power demand, specifically by allocating this portion of redundant power to the target unit in the candidate power set. For example, a situation that 30 power units were originally intended to be equally allocated among three charging units A, B, and C; if the power upper limit value of A is 8 power units, then 2 power units become redundant and available for allocation; and at this point, B and C are determined as belonging to the candidate power set, so that the 2 redundant power units can subsequently be allocated to B and C within the candidate power set.

In some embodiments, after step S35, the method further includes:

S36, when all charging units in the set of power to be allocated have been traversed, determining a new set of power to be allocated based on the candidate power set.

In this step, it is apparent that if redundant power is found in previous steps-i.e., if there exists a case where the power upper limit value of a target charging unit is smaller than the average power-it is necessary to allocate the redundant power to the target charging units in the candidate power set. In this embodiment, the candidate power set is not directly used as a set configured to allocate power, but rather serves as an intermediate variable set to determine target charging units eligible to receive redundant power. Then the determined target charging unit is then re-determined as the new set of power to be allocated. With such a technical solution, the entities of the set receiving allocated power are always in the set of power to be allocated each time, thereby avoiding interference caused by entity changes. For example, a situation that the system allocates power to a set of power to be allocated X each time; for a target charging unit B in set X with a power upper limit value greater than the average power, it is moved into candidate power set Y; at this time, set X has not yet been fully traversed, so judgment needs to continue on elements in set X; and for another target charging unit C with a power upper limit value greater than the average power, it is moved into candidate power set Y. This makes it possible, when the set X has not been fully traversed, to still mark part of the target charging units in it without affecting the remaining traversal tasks of the set X.

In some embodiments, after step S36, the method further includes:
S37: when all the charging units in the set of power to be allocated have been traversed, judging whether the second quantity of charging units contained in the candidate power set is equal to the first quantity in the set of power to be allocated before traversal.

In this step, the second quantity refers to the number of charging units contained in the candidate power set, and the first quantity refers to the number of charging units contained in the set of power to be allocated before traversal. By judging whether the first quantity is equal to the second quantity, it can be judged whether there exists a target charging set whose power upper limit value is smaller than the average power in the set of power to be allocated. Therefore, it can be judged whether there is redundant power in the set of power to be allocated.

S38: If they are not equal, re-executing step S31.

In this step, if the first quantity is not equal to the second quantity, it can be judged that there is redundant power in the set of power to be allocated, and the redundant power needs to be allocated to other target charging units capable of receiving the redundant power. It could be appreciated that since at this point the set of power to be allocated has been re-determined by the candidate power set, both the total power to be allocated and the average power of the new set of power to be allocated have changed and need to be recalculated for determination. For example, a situation that if the total power to be allocated of the initial set of power to be allocated X is 50 power units, and five target charging units A, B, C, D, and E are included, then the average power is 10 power units. In the first traversal process for determining the target power, since the power upper limit value of target charging unit A is 2 power units, the target power of A is directly determined as 2; and at this point, the candidate power set Y includes four target charging units-B, C, D, and E-which is not equal in number to the five target charging units in the set of power to be allocated X. Therefore, after the candidate power set Y is re-determined as the set of power to be allocated X, a second traversal process for determining the target power is performed. The new total power to be allocated is 48 power units, and the new average power is 12 power units. At this point, since the power upper limit values of target charging units B and C are 11, the candidate power set Y contains only two target charging units of D and E, which is not equal in number to the four target charging units in the set of power to be allocated X, so a third traversal process for determining the target power is performed. The subsequent processes are not elaborated here. It could be understood that as long as the number of target charging units in the set of power to be allocated X and the candidate power set Y are not identical, the step of determining target charging power is cyclically executed until either the number of target charging units in the final set of power to be allocated X and the candidate power set Y are equal, or the set of power to be allocated X contains no target charging units.

S39: If they are equal, determining the average power as the target power.

In this step, if the first quantity equals the second quantity, it can be determined that there is no redundant power in the set of power to be allocated; and at this time, the target power is determined for the target charging units still in the set of power to be allocated based on the average power of the set of power to be allocated. For example, a situation that after multiple traversal processes for determining the target power, the number of elements in the set of power to be allocated X equals that in the candidate power set Y; and at this point, for target charging units D and E still belonging to the set X, the power to be allocated of the set X is 26 power units, and the average power is 13 power units, so the target powers of D and E are also 13 power units.

In some embodiments, before determining the target power, it is also necessary to determine the power upper limit value of the allocation-pending charging unit, specifically including the following steps: firstly, determining a first power upper limit value of a charging device corresponding to the allocation-pending charging unit and determining a second power upper limit value of a device to be charged corresponding to the allocation-pending charging uni, and then, determining the power upper limit value of the allocation-pending charging unit according to the minimum value of the first power upper limit value and the second power upper limit value.

Specifically, a allocation-pending charging unit has a corresponding charging device and a device to be charged, and when allocating power is performed, the power of the allocation-pending charging unit can neither exceed the first power upper limit value of the charging device nor exceed the second power upper limit value of the device to be charged, and these two constitute constraint conditions for the power upper limit value of the charging unit. For example, a situation that when the allocation-pending charging unit is a charging pile, the corresponding charging device is the charging pile itself, and the corresponding device to be charged may be a new energy vehicle; and the power upper limit value of the charging pile cannot exceed the first power upper limit value that can be output by itself to prevent charging pile overload, nor can it exceed the second power upper limit value acceptable by the new energy vehicle.

Further, in some other embodiments, the allocation-pending charging unit includes a monitoring module capable of acquiring the reported power value of the allocation-pending charging unit. Therefore, before determining the power upper limit value of the allocation-pending charging unit, the method further comprises acquiring the reported power value of the allocation-pending charging unit and determining that the sum of the reported power value and a preset threshold is the third power upper limit value. The power upper limit value of the allocation-pending charging unit is determined as the minimum among the first power upper limit value, the second power upper limit value, and the third power upper limit value.

In this step, the third power upper limit value is defined as the sum of the reported power value of the allocation-pending charging unit and the threshold, so that the power allocation method can more reasonably perform power recovery adjustment based on actual conditions, helping the power allocation method converge toward actual conditions, continuously adjusting redundant power among charging units for recovering and releasing, thereby improving power utilization efficiency.

For example, a situation where the new energy vehicle connected to the charging pile has approached a fully charged state, so its actual reported charging power continues to decrease. At this time, if power is still allocated based on the previous power upper limit value, the allocated power would be significantly higher than the actual reported power, resulting in redundant power and thus reducing power utilization efficiency. Conversely, if the actual reported power is taken into account, the reported power of the charging unit is adjusted according to the sum of the actual reported power and a floating threshold, thereby enabling more reasonable power allocation to the charging unit in such scenarios and improving power utilization efficiency.

It could be understood that during the initial period of the charging process, since the device to be charged has not yet reached a fully charged state, the issued power of the charging unit typically does not exceed the sum of the reported power and the threshold. Therefore, in some embodiments, within the first 30 minutes after the start of charging, the power upper limit value of the charging unit is determined according to the minimum of the first power upper limit value and the second power upper limit value; and after 30 minutes from the start of charging, the power upper limit value of the charging unit is determined according to the minimum among the first power upper limit value, the second power upper limit value, and the third power upper limit value.

It could also be understood that in some embodiments, when the issued power of the charging unit exceeds the sum of the reported power and the threshold, the charging unit performs the charging power allocation method provided in the embodiments of the present application. During the charging power allocation process, if the power upper limit value of the charging unit is smaller than the actual reported power value, the power upper limit value is re-determined as the reported power value. Otherwise, the power upper limit value of the charging unit remains unchanged.

In some embodiments, after determining the power upper limit value of the allocation-pending charging unit and before determining the target power, the method further comprises judging whether the total power to be allocated exceeds the sum of the power upper limit values. If the total power to be allocated exceeds this sum, allocating power to the charging units according to their respective power upper limit values is performed.

If, in this step, the total power to be allocated is greater than the sum of the maximum powers required by all charging units, it is clear that all charging units can be allocated power according to the power upper limit value, and redundant power can also be recovered. For example, a situation that if the charging group has a total power to be allocated of 40 power units, and the power upper limit values of the three charging piles A, B, and C in the charging group are 10,12, and 15 respectively, then each charging pile can be allocated according to its power upper limit value, and the charging group still has redundant power.

In some embodiments, before determining the target power, the method further includes determining the power lower limit value of the allocation-pending charging unit, judging whether the sum of the power lower limit values is greater than the total power to be allocated, and allocating power to the charging unit according to the power lower limit value when the sum of the power lower limit values is greater than the total power to be allocated.

In this step, the power lower limit value of each charging unit can be custom-set to meet the charging task requirements. Specifically, for each charging unit, if the allocated power is less than the power lower limit value, power is allocated to the charging unit according to the power lower limit value; and if the total power to be allocated for the set to be charged cannot satisfy the power lower limit value of each charging unit, power is allocated to the charging unit according to the power lower limit value.

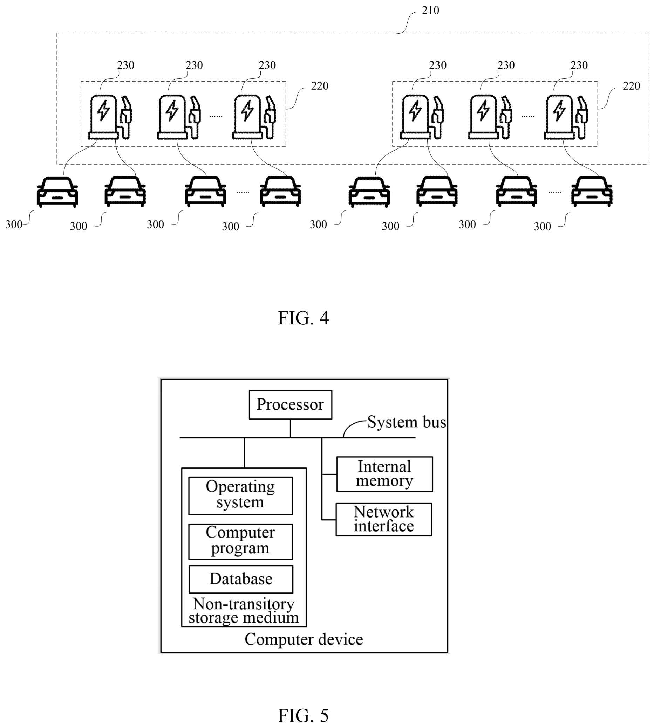

Please refer to Fig. 4, which is an architecture diagram of a charging station with a multi-tier architecture according to an embodiment of the present application.

With the technical solution of the present application, for the multi-tier architecture of charging station 210 - charging group 220 - charging pile 230, the power upper limit value of each group is determined by acquiring the sum of the power upper limit values of the charging piles 230 included in each group and the sum of the power upper limit values of the connected devices to be charged 300, thereby obtaining the allocated power for each group based on the calculation of this power upper limit value and the total power to be allocated of charging station 210. For the multiple charging piles 230 included in each charging group 220, the power upper limit of each charging pile 230 is determined based on the reported power, the charging power upper limit value, and the power upper limit value of the device to be charged 300, and power is allocated to each charging pile 230 based on the power upper limit of the charging pile 230 and the total power value of the charging group 220. Therefore, the power allocation algorithm in the embodiments of the present application is capable of performing power allocation on a multi-tier architecture and dynamically adjusting based on the reported actual power, enabling the allocated power to converge to the actual power, thereby improving the power utilization efficiency of the entire charging station 210.

Embodiments of the present application further provide a computer-readable storage medium storing a computer program comprising program instructions. The program instructions, when executed by a computer, cause the computer to perform the method as described in the foregoing embodiments.

Embodiments of the present application further provide an electronic device including a memory, a processor, and a computer program stored in the memory and executable on the processor. Its internal structure may be as shown in Fig. 5, wherein the processor executes the computer program to implement the charging power allocation method of the foregoing embodiments.

Through the above solution, with regard to a charging system, by comparing the average power of the allocation-pending charging set with the power upper limit value of each target charging unit, a target charging unit with a lower charging power demand can be charged at the power upper limit value, preventing power redundancy; and for a target charging unit with a higher charging power demand, redundant power is evenly allocated to increase the allocated power. This ensures that charging units with low charging power demands in the entire system operate at full capacity without overloading, while those with high charging power demands receive both average power and redundant power, maximizing the allocation of power as much as possible. As a result, charging units with different charging power requirements across the system can obtain optimized power allocation, thereby improving the overall power utilization efficiency.

It could be appreciated by those of ordinary skill in the art that implementing all or part of the flow of the methods of the embodiments described above can be accomplished by instructing the associated hardware by a computer program. The computer program can be stored in a non-transitory computer-readable storage medium, and when executed, can include the flow of the embodiments of the methods as described above. Any reference to a memory, storage, database, or other medium used in the embodiments provided herein may include non-transitory and/or volatile memory. The non-transitory memory may include a read-only memory (ROM), a programmable ROM (PROM), an electrically programmable ROM (EPROM), an electrically erasable programmable ROM (EEPROM), or flash memory. Volatile memory can include random access memory (RAM) or external cache memory. By way of illustration and not limitation, RAM is available in many forms such as static RAM (SRAM), dynamic RAM (DRAM), synchronous DRAM (SDRAM), double data rate SDRAM (DDRSDRAM), enhanced SDRAM (ESDRAM), synchronization link (Synchlink) DRAM (SLDRAM), memory bus (Rambus) direct RAM (RDRAM), Direct Rambus Dynamic RAM (DRDRAM), and Rambus Dynamic RAM (RDRAM), among others.

It can be clearly understood by a person skilled in the art that, for the convenience and brevity of description, only the division of the above-mentioned functional units and modules is exemplified. In practical applications, the above-mentioned functions can be allocated by different functional units and modules according to needs, i.e., dividing the internal structure of the apparatus into different functional units or modules is performed so as to complete all or part of the functions described above.

The above embodiments are merely illustrative of the technical solutions of the present invention and are not intended to be limiting thereof; although the present invention has been described in detail with reference to the foregoing examples, those skilled in the art will appreciate that: the technical solutions recited concerning the above examples can still be modified, or some of the technical features thereof can be equivalently replaced; and such modifications and substitutions do not depart the nature of the corresponding technical solutions from the spirit and scope of the technical solutions of the embodiments of the present invention and should be included within the scope of the present invention.

## Claims

1. A charging power allocation method, **characterized by** comprising:
acquiring a set of power to be allocated, wherein the set of power to be allocated comprises an allocation-pending charging unit in a state of waiting for power allocation, and a total power to be allocated of the set of power to be allocated is a preset total power minus a total allocated power;
determining a target power according to an average power of the set of power to be allocated and a power upper limit value of a target charging unit, wherein the target charging unit is one allocation-pending charging unit of the set of power to be allocated; and
allocating power to the target charging unit according to the target power.

2. The method according to claim 1, **characterized in that** the determining a target power according to the average power and a power upper limit value of a target charging unit comprises:
acquiring the average power of the set of power to be allocated and a candidate power set;
traversing the set of power to be allocated to determine one charging unit as the target charging unit; and
judging whether the power upper limit value of the target charging unit is smaller than the average power,
if yes, determining the power upper limit value as the target power, and calculating the total power to be allocated based on the target power and the preset total power, and
if no, moving the target charging unit to the candidate power set.

3. The method according to claim 2, **characterized in that** the acquiring the average power of the set of power to be allocated comprises:
determining that the set of power to be allocated contains a first quantity of allocation-pending charging units; and
calculating the average power of the set of power to be allocated according to the total power to be allocated and the first quantity.

4. The method according to claim 2, **characterized by** further comprising:
when all charging units in the set of power to be allocated have been traversed, determining a new set of power to be allocated based on the candidate power set.

5. The method according to claim 4, **characterized by** further comprising:
when all the charging units in the set of power to be allocated have been traversed, judging whether a second quantity of charging units contained in the candidate power set is equal to a quantity of the set of power to be allocated before traversal; and
if they are equal, determining the average power as the target power.

6. The method according to claim 1, **characterized in that** prior to the determining a target power, the method further comprises:
determining a first power upper limit value of a charging device corresponding to the allocation-pending charging unit;
determining a second power upper limit value of a device to be charged corresponding to the allocation-pending charging unit; and
determining the power upper limit value of the allocation-pending charging unit based on a minimum of the first power upper limit value and the second power upper limit value.

7. The method according to claim 6, **characterized in that** prior to the determining the power upper limit value of the allocation-pending charging unit, the method further comprises:
acquiring a reported power value of the allocation-pending charging unit;
determining that a sum of the reported power value and a preset threshold value is a third power upper limit value; and
then, the determining the power upper limit value of the allocation-pending charging unit being:
determining the power upper limit value of the allocation-pending charging unit based on a minimum of the first power upper limit value, the second power upper limit value, and the third power upper limit value.

8. The method according to claim 6 or 7, **characterized in that** after the determining the power upper limit value of the allocation-pending charging unit, the method further comprises:
judging whether the total power to be allocated is greater than a sum of the power upper limit values; and
when the total power to be allocated is greater than the sum of the power upper limit values, allocating power to the charging unit according to the power upper limit value.

9. The method according to any one of claims 1 to 7, **characterized in that** prior to the determining a target power, the method further comprises:
determining a power lower limit value of the allocation-pending charging unit;
judging whether a sum of the power lower limit values is greater than the total power to be allocated; and
when the sum of the power lower limit values is greater than the total power to be allocated, allocating power to the charging unit according to the power lower limit value.

10. An electronic device, comprising a memory, a processor, and a computer program stored in the memory and executable by the processor, **characterized in that** the processor, when executing the computer program, implements the method according to any one of claims 1 to 9.

11. A storage medium storing a computer program, **characterized in that** the computer program, when executed by a processor, implements the method according to any one of claims 1 to 9.
